# EUROPÄISCHE PATENTANMELDUNG

(11) **EP 1 319 533 A1**
(43) Veröffentlichungstag der Anmeldung: **18.06.2003**
(21) Anmeldenummer: 01129784.3
(22) Anmeldetag: 14.12.2001
(51) Int. Cl.: B60G 3/26

(54) **Radaufhängung für ein Kraftfahrzeug**

(71) Anmelder: Ford Global Technologies, Inc., A subsidiary of Ford Motor Company, Dearborn, Michigan 48126 (US)
(72) Erfinder: Frantzen, Michael, 52076 Aachen (DE)
(74) Vertreter: Drömer, Hans-Carsten, Dipl.-Ing.

(57) **Zusammenfassung**

Die Erfindung betrifft eine Radaufhängung für ein Kraftfahrzeug, wobei der Achsschenkel (1) an einem Träger (3) um eine vertikale Achse (6) drehbeweglich befestigt ist. Die vertikale Achse (6) läuft dabei näherungsweise durch das Zentrum (Z) des Rades. Der Träger (3) ist ferner an seinem unteren Ende vorzugsweise über einen Lenker (8) mit der Karosserie oder einem Hilfsrahmen gekoppelt. Anstelle des Achsschenkels (1) kann auch eine Spindel um eine vertikale Achse durch das Radzentrum drehbeweglich gelagert sein.

## Beschreibung

Die Erfindung betrifft eine Radaufhängung für ein Kraftfahrzeug enthaltend ein Lagerelement für die Radachse.

Eine Radaufhängung der eingangs genannten Art ist aus der DE 44 09 571 A1 bekannt. Hierbei handelt es sich um eine sogenannte McPherson-Federbeinachse mit einem Achsschenkel, an welchem ein Rad des Kraftfahrzeugs mit seiner Drehachse gelagert ist. Der Achsschenkel ist femer über ein Federbein bestehend aus einem Dämpferkolben und einer Spiralfeder sowie über einen Querlenker mit der Karosserie gekoppelt. Um die Tendenz einer derartigen Radaufhängung zu Lenkradschwingungen und einem unruhigen Lauf zu verringern, wird gemäß der DE 44 09 571 A1 der Dämpferzylinder verdrehsicher gelagert, was insbesondere durch einen zusätzlich daran angebrachten und mit der Karosserie gekoppelten Lenker geschehen kann.

Vor diesem Hintergrund war es Aufgabe der vorliegenden Erfindung, eine vereinfachte Radaufhängung bereitzustellen, welche eine geringe Übertragung von Störungen und Schwingungen aufweist.

Diese Aufgabe wird durch eine Radaufhängung mit den Merkmalen des Anspruchs 1 gelöst. Vorteilhafte Ausgestaltungen sind in den Unteransprüchen enthalten.

Die erfindungsgemäße Radaufhängung für ein Kraftfahrzeug enthält ein Lagerelement für die Drehachse des aufzuhängenden Rades. Bei dem Rad kann es sich um ein angetriebenes oder nicht angetriebenes Vorderrad oder Hinterrad des Kraftfahrzeugs handeln. Das Lagerelement kann insbesondere ein Achsschenkel oder eine Spindel sein. Erfindungsgemäß ist das Lagerelement an einem Träger bezüglich einer im wesentlichen vertikalen Achse drehbar gelagert, wobei die vertikale Achse in enger Nähe an dem Radzentrum bzw. Radmittelpunkt vorbeiläuft. Dies soll insbesondere den Fall einschließen, daß die vertikale Achse durch das Radzentrum verläuft.

Durch die erfindungsgemäße drehbare Lagerung des Lagerelementes um die erläuterte vertikale Achse wird ein zusätzlicher Freiheitsgrad eingeführt. Den Bremskrafthebel sowie der Beschleunigungskrafthebel und der Stoßradius lassen sich somit beliebig einstellen wobei wie bevorzugt minimiert werden. Auf diese Weise werden die Erzeugung und Weiterleitung von störenden Schwingungen und Kräften minimiert.

Weiterhin kann der Träger des Lagerelementes an seinem unteren Ende in einem Gelenk mit einem mit der Karosserie gekoppelten Lenker verbunden sein. Bei dem Gelenk handelt es sich insbesondere um ein Schamiergelenk. Die Fixierung des unteren Endes des Trägers in einem Gelenk verringert dessen Freiheitsgrade entsprechend und führt zu einer erhöhten Steifigkeit des Systems.

Ferner kann der Träger direkt oder indirekt über ein Federbein mit der Karosserie gekoppelt sein. Ein Federbein besteht in bekannter Weise aus einem Dämpferkolben und einer Schraubendruckfeder und sorgt für eine gedämpfte, elastische Abstützung des Rades an der Karosserie.

Im Folgenden wird die Erfindung mit Hilfe der Figuren beispielhaft näher erläutert.
Es zeigen:
- Fig. 1: schematisch eine Seitenansicht einer erfindungsgemäßen Radaufhängung vom modifizierten McPherson-Typ;
- Fig. 2: eine detailliertere perspektivische Darstellung der Radaufhängung gemäß Figur 1;
- Fig. 3: eine schematische Darstellung einer erfindungsgemäßen Radaufhängung vom Typ mit zwei Querlenkern;
- Fig. 4: eine detailliertere perspektivische Darstellung der Radaufhängung nach Figur 3;
- Fig. 5: einen Teil einer erfindungsgemäßen Radaufhängung mit einer Spindel.

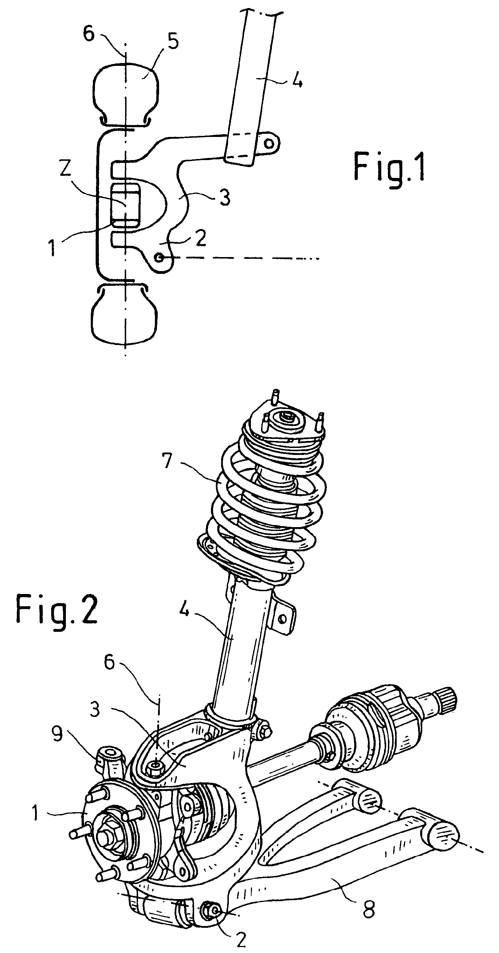

Figur 1 zeigt in einer schematischen Seitenansicht eine erfindungsgemäße Radaufhängung, welche in ihrer Konstruktion vom sogenannten McPherson-Federbein ausgeht. Über die Radaufhängung wird ein Rad 5 des Kraftfahrzeugs mit der Karosserie (nicht dargestellt) verbunden. Das Rad 5 ist dabei mit seiner horizontalen Drehachse an einem Achsschenkel 1 drehbar gelagert. Der Achsschenkel 1 ist seinerseits um eine vertikale Achse 6 drehbar in einem gabelförmigen Träger 3 gelagert. Die vertikale Achse 6 läuft durch das Zentrum Z des Rades 5 beziehungsweise in großer Nähe an diesem vorbei. Vorzugsweise beträgt ihr Abstand vom Zentrum weniger als 80%, besonders bevorzugt weniger als 20% der Rad- bzw. Felgenbreite. Durch diese drehbewegliche Lagerung des Achsschenkels 1 werden Hebelwege verkürzt, welche bei üblichen Radaufhängungen zur Übertragung von störenden Kräften auf die Lenkung führen.

Der Träger 3 ist an seinem oberen Ende über den Dämpferkolben 4 eines Federbeins mit der Karosserie gekoppelt. Weiterhin ist dieser an seinem unteren Ende in einem Gelenkpunkt 2 über einen bevorzugt gabelförmigen Lenker 8 (Figur 2) mit der Karosserie oder einem hier nicht dargestellten Hilfsrahmen verbunden, wobei der Lenker 8 seinerseits drehbeweglich an der Karosserie oder dem Hilfsrahmen befestigt ist. Durch diese Ankopplung des Trägers 3 an die Karosserie werden dessen Freiheitsgrade reduziert, was zu einer zusätzlichen Isolation und einer erhöhten Steifheit führt.

In Figur 2 ist eine mögliche Ausgestaltung der vorstehend beschriebenen Radaufhängung perspektivisch dargestellt. Dabei ist insbesondere der Aufbau des Federbeines aus Dämpferkolben 4 und Schraubendruckfeder 7 erkennbar. Ferner ist am Achsschenkel 1 ein Ansatz 9 zu sehen, an welchem ein weiteres Lenkerelement beziehungsweise eine Spurstange befestigt werden kann.

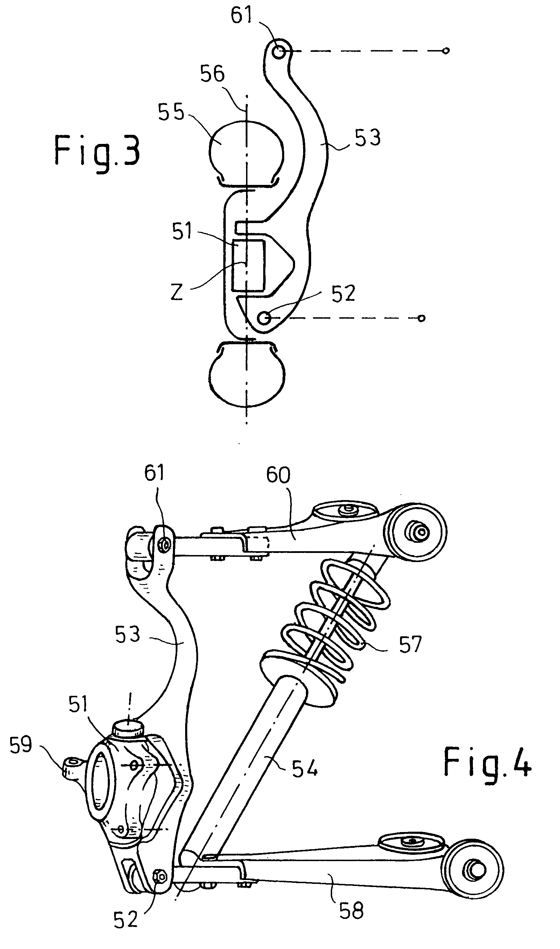

Die Figuren 3 und 4 zeigen eine andere Ausgestaltung einer erfindungsgemäßen Radaufhängung in einer schematischen Seitenansicht. Erfindungsgemäß ist der Achsschenkel 51, welcher ein Rad 55 drehbeweglich lagert, um eine vertikale Achse 56 drehbar an dem Träger 53 befestigt. Bei dem Träger 53 handelt es sich um eine bogenförmige Gabel, welche an ihrem oberen Ende in einem Gelenk 61 und an ihrem unteren Ende in einem Gelenk 52 drehbeweglich mit einem Querlenker 60 beziehungsweise einem Querlenker 58 verbunden ist. Die genannten Querlenker 58, 60 sind ihrerseits drehbeweglich mit der Karosserie verbunden.

Wie die perspektivische Ansicht von Figur 4 zeigt, ist der untere Querlenker 58 über ein Feder-Dämpfer-Element enthaltend einen Dämpferkolben 54 und eine Feder 57 mit der Karosserie gekoppelt. Ferner ist am Achsschenkel 51 ein Ansatz 59 zu sehen, an welchem ein weiteres Lenkerelement beziehungsweise eine Spurstange befestigt werden kann.

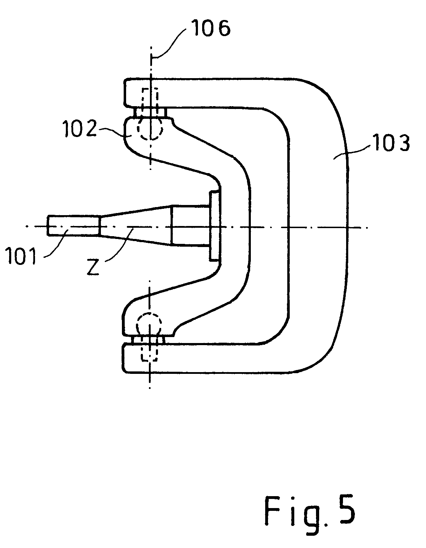

Figur 5 zeigt schließlich ein Detail einer Radaufhängung, bei welcher das Rad nicht in einem Achsschenkel, sondern an einer Spindel 101 befestigt ist. Die Spindel 101 wird dabei von einem U-förmigen Joch 102 getragen, welches seinerseits an einem U-förmigen Träger 103 drehbeweglich um die vertikale Achse 106 befestigt ist. Erfindungsgemäß verläuft die vertikale Achse 106 wiederum (annähernd) durch das Zentrum Z der Radaufhängung.

## Patentansprüche

1. Radaufhängung für ein Kraftfahrzeug, enthaltend ein Lagerelement (1, 51, 101) für die Radachse,
**dadurch gekennzeichnet, daß**
das Lagerelement an einem Träger (3, 53, 103) bezüglich einer im wesentlichen vertikalen Achse (6, 56, 106) drehbar gelagert ist, und wobei die vertikale Achse nahe dem Radzentrum (Z) verläuft.

2. Radaufhängung nach Anspruch 1,
**dadurch gekennzeichnet, daß**
der Träger (3, 53, 103) an seinem unteren Ende in einem Gelenk (2, 52) mit einem mit der Karosserie oder einem Hilfsrahmen gekoppelten Lenker (8, 58) verbunden ist.

3. Radaufhängung nach einem der Ansprüche 1 oder 2,
**dadurch gekennzeichnet, daß**
das Lagerelement ein Achsschenkel (1, 51) ist.

4. Radaufhängung nach einem der Ansprüche 1 oder 2,
**dadurch gekennzeichnet, daß**
das Lagerelement eine Spindel (101) ist.

5. Radaufhängung nach einem der Ansprüche 1 bis 4,
**dadurch gekennzeichnet, daß**
der Träger (3, 53) über ein Federbein (4, 7, 54, 57) mit der Karosserie gekoppelt ist.
